# EUROPÄISCHE PATENTANMELDUNG

(11) **EP 1 327 875 A1**
(43) Veröffentlichungstag der Anmeldung: **16.07.2003**
(21) Anmeldenummer: 02405013.0
(22) Anmeldetag: 11.01.2002
(51) Int. Cl.: G01N 21/65

(54) **Verfahren und Vorrichtung zur Bestimmung von Ölkonzentrationen in Wasser**

(71) Anmelder: ABB RESEARCH LTD., 8050 Zürich (CH)
(72) Erfinder: Matter, Daniel, 5200 Brugg (CH); Haffner, Ken Yves, 5400 Baden (CH); Kleiner, Thomas, 5442 Fislisbach (CH)
(74) Vertreter: ABB Patent Attorneys

(57) **Zusammenfassung**

Zur Bestimmung von Ölkonzentrationen in Unterwasser-Separationstanks (1) der Offshore-Erdölförderung wird Licht von einer über dem Wasser angeordneten Lichtquelle (30) über einen ersten faseroptischen Lichtleiter (20) in eine Messzelle (12) des Separationstanks (1) geleitet. An Öl ramangestreutes Licht wird über einen zweiten Lichtleiter (21) nach oben zu einer über dem Wasser befindlichen Auswerteeinheit (31) geleitet und ausgewertet. Die Intensität der Raman-Spektrallinie korreliert mit der Ölkonzentration in Wasser.

## Beschreibung

### Technisches Gebiet

Die Erfindung betrifft ein Verfahren und eine Vorrichtung zur Bestimmung von Ölkonzentrationen in Wasser gemäss dem Oberbegriff des Patentanspruches 1 beziehungsweise 6.

### Stand der Technik

Bei der Erdölförderung fallen grosse Mengen an Wasser an. Dieses sogenannte Prozesswasser beinhaltet Erdöl in Konzentrationen von kleiner als 1%. Das Prozesswasser muss weitgehend von diesem Öl befreit werden, bevor es ins Meer oder zurück in den Meeresboden gepumpt werden darf. Einerseits sind es gesetzliche Bestimmungen, welche beachtet werden müssen. Andererseits möchten die Ölförderer nicht zu grosse Ölmengen zurück in den Meeresgrund pumpen, um eine möglichst grosse Ausbeute zu erhalten. Eine Überwachung der Ölkonzentration im Prozesswasser ermöglicht ferner, Rückschlüsse über den Verlauf der Separation zu ziehen und dient deshalb zur Überwachung des Injektionsprozesses. Je nach Region und Art der Rückförderung existieren verschiedene Konzentrationsgrenzwerte. So ist er in der Nordsee für eine Entsorgung des Prozesswassers ins offene Meer bei 40 Teile Öl in einer Million Teile Wasser, das heisst bei 40 ppm, angesetzt. Wird das Prozesswasser in die Ölquelle zurückgepumt, werden Bereiche von 100 ppm bis zu 5000 ppm angestrebt.

Die Reinigung des Prozesswassers erfolgt in einem aufwendigen Separationsprozess. Um diesen zu kontrollieren, muss die Ölkonzentration gemessen werden. Die Messung wird dadurch erschwert, dass sie online in relativ grossen Tiefen auf dem Meeresboden durchgeführt werden soll. Geräte, welche auf dem Markt angeboten werden, sind zwar für den Einsatz an Land und auf Förderplattformen geeignet, nicht jedoch für Unterwasser-Separatortanks. Diese befinden sich auf dem Meeresboden in Tiefen von bis zu einigen hundert Metern, wo extreme Druckund Temperaturbedingungen herrschen. Typische Drücke liegen dabei im Bereich von 60 bis 150 bar und die Temperatur beträgt 55 bis 120 °C. Aufgrund der auf dem Meeresgrund herrschenden Bedingungen steht nur eine sehr begrenzte Auswahl an Materialien und Formen für Messvorrichtungen, insbesondere für die Sensoren, zur Verfügung. Zudem sollten derartige Sensoren möglichst wartungsfrei sein und eine grosse Langzeitstabilität aufweisen. Aus diesen Gründen ist bis jetzt keine geeignete Vorrichtung zur Bestimmung von Ölkonzentrationen für Unterwasser-Separationstanks bekannt.

Es ist jedoch bekannt, Ölkonzentrationen in Wasser mit optischen Methoden, genauer mittels Ramanstreuung, zu messen. Eine derartige Methode offenbart US-A-3'806'727. Hierfür wird einerseits das Fluoreszenzspektrum von Öl und andererseits das Ramanspektrum von Wasser bestimmt. Dies erfolgt, indem UV-Licht durch ein erstes optisches Fenster in eine von ölverschmutztem Wasser durchflossene Messzelle fokussiert wird. Das unter 90° gestreute Licht gelangt durch ein zweites optisches Fenster nach aussen, wo es über einen dichroitischen Strahlteiler in zwei Wellenlängen unterteilt wird, nämlich in das durch die Ölverschmutzung erzeugte Fluoreszenzlicht und in das Ramanspektrum, welches durch inelastische Stösse der einfallenden Photonen an den Wassermolekülen entstanden ist. Das Fluoreszenzspektrum wie auch das Ramanspektrum werden je einem Photomultiplier zugeführt. Das Verhältnis dieser zwei Intensitäten dient als Mass für die Ölverschmutzung des Wassers.

In US-A-5'296'711 wird ein Verfahren beschrieben, um einen Ölfilm auf Wasser zu detektieren. Hier werden zwei Laserstrahlen mit unterschiedlichen UV-Wellenlängen auf denselben Punkt der Wasseroberfläche gerichtet. Durch Wechselwirkung mit den Wassermolekülen erfolgt wiederum eine Ramanverschiebung der Wellenlängen. Die zwei ramanverschobenen Wellenlängen werden getrennt detektiert und das Verhältnis der zwei Intensitäten der zwei Lichtstrahlen gebildet. Unterscheidet sich das Verhältnis von 1, so wurde ein Ölfilm entdeckt.

Diese zwei Messverfahren ermöglichen zwar die Detektion von Ölverschmutzungen in Wasser. Sie sind jedoch für den Einsatz in Unterwasser-Separationstanks nicht geeignet.

### Darstellung der Erfindung

Es ist deshalb Aufgabe der Erfindung, ein Verfahren und eine Vorrichtung zur Bestimmung von Ölkonzentrationen in Wasser zur schaffen, welche sich insbesondere für den Einsatz bei der Unterwasser-Erdölförderung eignen.

Diese Aufgabe löst ein Verfahren und eine Vorrichtung mit den Merkmalen des Patentanspruches 1 beziehungsweise 6.

Erfindungsgemäss wird die Ölkonzentration in Wasser bestimmt, indem an Öl ramanverschobenes Licht detektiert und ausgewertet wird. Dies lässt sich erreichen, indem sichtbares Licht oder Licht im Infrarotbereich, insbesondere im nahen Infrarotbereich eingestrahlt wird.

Gute Resultate wurden mit Wellenlängen von 735 nm beziehungsweise 1061 nm erzielt.

Die Detektion von an Öl ramanverschobenem Licht vereinfacht das Messverfahren, da keine Vergleiche von Fluoreszenzspektren und Ramanspektren oder von Ramanspektren von Lichtquellen mit unterschiedlichen Wellenlängen gemacht werden müssen. Dies ermöglicht die Verwendung einer sehr einfachen Messvorrichtung, welche gerade deshalb für den Einsatz bei einem Unterwasser-Separationstank in der Offshore-Erdölförderung optimal geeignet ist.

Für den Einsatz in der Offshore-Erdölförderung lässt sich das Licht mittels eines faseroptischen Lichtleiters von der Meeresoberfläche zu einem Unterwasser-Separationstank leiten und das aufgrund der Wechselwirkung mit Ölrückständen im Prozesswasser ramangestreute Licht über einen zweiten Lichtleiter wieder an die Meeresoberfläche zurückbringen, um es in einer über der Meeresoberfläche befindlichen Auswerteeinheit auszuwerten. Vorteilhaft an diesem Verfahren und dieser Vorrichtung ist, dass keine aktiven Komponenten unter Wasser betrieben werden müssen. Zudem ist die Messmethode druck- und temperaturunabhängig.

Vorteilhaft ist ferner, dass im verwendeten Wellenlängenbereich des nahen Infrarots Laserquellen auf dem Markt erhältlich sind, welche eine hohe spektrale Leistungsdichte aufweisen und sich im Gegensatz zur UV-Strahlung über Distanzen von einigen Kilometern übertragen lassen. UV-Strahlung würde dabei zu stark absorbiert werden.

Dank dem erfindungsgemässen Verfahren und der entsprechenden Vorrichtung lassen sich kleinste Ölkonzentrationen von einigen ppm bis zu 5000 ppm im Prozesswasser der Unterwasser-Erdölförderung auf einfache Art und Weise nachweisen. Das Verfahren und die Vorrichtung lassen sich jedoch auch in anderen Bereichen zur Bestimmung von Ölverschmutzungen einsetzen. Sie eignen sich zudem zur Bestimmung sowohl von gelösten wie auch ungelösten Ölrückständen in Wasser.

Weitere vorteilhafte Varianten des Verfahrens und vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispieles, welches in der beiliegenden Zeichnung dargestellt ist, erläutert. Es zeigen:
- Figur 1: eine schematische Darstellung einer erfindungsgemässen Messvorrichtung, eingesetzt in der Offshore-Erdölförderung;
- Figur 2: eine schematische Darstellung einer Messzelle und
- Figur 3a bis: Figur 3e graphische Darstellungen von Messreihen bei verschiedenen Ölkonzentrationen in Wasser.

### Wege zur Ausführung der Erfindung

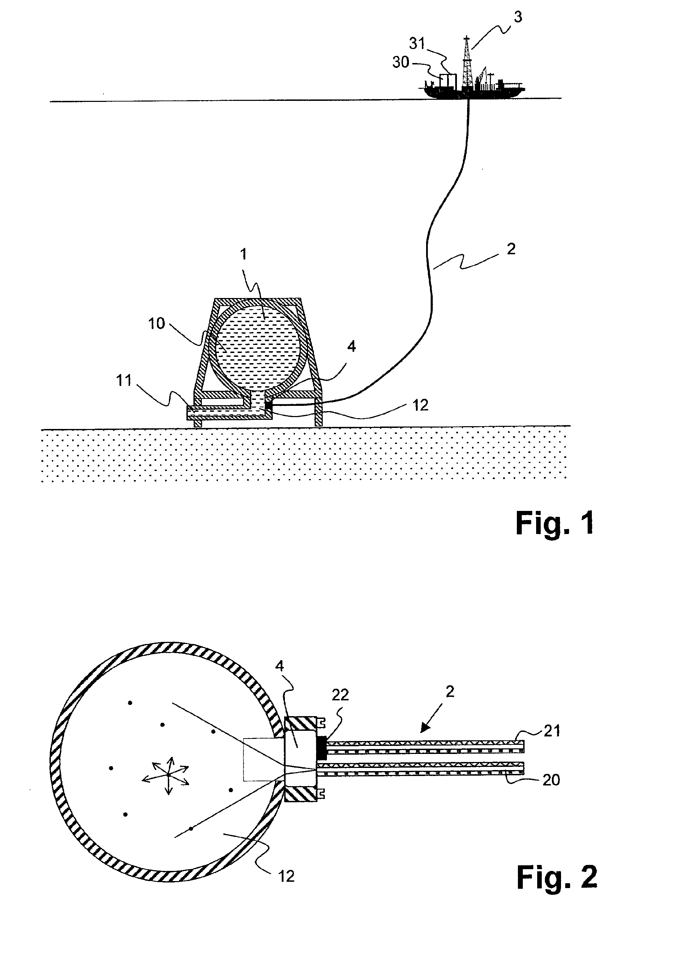

In Figur 1 ist ein Ausführungsbeispiel für eine erfindungsgemässe Vorrichtung dargestellt, wie sie sich in der Offshore-Erdölförderung einsetzen lässt.

Auf dem Meeresboden ist ein Unterwasser-Separationstank 1 angeordnet. Dieser weist im wesentlichen eine hier nicht dargestellte Einlassöffnung, einen Speicherraum 10 zur Durchführung der Separation und einen damit verbundenen Entleerungskanal 11 für gereinigtes Prozesswasser auf. Der Entleerungskanal 11 bildet im speicherraumnahen Bereich eine Messzelle 12, welche mit einem optischen Fenster 4 versehen ist. Das optische Fenster 4 ist für die zur Messung verwendeten Wellenlängen des einfallenden Lichtes wie auch für die Wellenlängen des ramangestreuten Lichtes durchsichtig. Vorzugsweise wird für das optische Fenster 4 Quarzglas verwendet, welches keine optische Wechselwirkung mit dem einfallenden Licht aufweist.

Auf der Meeresoberfläche befindet sich, wie hier dargestellt, ein Schiff 3 oder eine Ölplattform. Auf dem Schiff 3 beziehungsweise der Ölplattform sind eine Lichtquelle 30, üblicherweise ein Laser 30, und eine Auswerteeinheit 31 angeordnet. Sie sind in Figur 1 schematisch und in übertriebener Grösse dargestellt.

Die Lichtquelle 30 und die Auswerteeinheit 31 sind über je einen faseroptischen Lichtleiter 20, 21 mit der unter Wasser angeordneten Messzelle 12 verbunden. Im hier dargestellten Beispiel sind die zwei Lichtleiter 20, 21 in einem gemeinsamen Glasfaserkabel 2 angeordnet. Das Glasfaserkabel 2 weist eine geeignete Ummantelung und Armierung auf, damit die Lichtleiter 20, 21 insbesondere von Meeresbewohnern nicht beschädigt werden können.

In Figur 2 ist schematisch die Ankopplung des Glasfaserkabels 2 an das optisches Fenster 4 dargestellt. Zur Ankopplung werden übliche Mittel verwendet, so dass hier nicht im Detail darauf eingegangen wird. Wesentlich ist lediglich, dass ein optisches Transmissionsfilter 22 vorhanden ist, um eine Rückübermittlung von Licht der anregenden Wellenlänge in die Auswerteeinheit 31 zu verhindern. Vorzugsweise ist dieses Filter 22, wie hier dargestellt, zwischen dem optischen Fenster 4 und dem rückführenden zweiten Lichtleiter 21 angeordnet.

Von der Lichtquelle 30 über den ersten Lichtleiter 20 in die Messzelle 12 eingestrahltes, anregendes Licht wechselwirkt mit den C-H-Vibrationsbanden des Öls. Einerseits erfolgt eine Ramanstreuung, welche für jede einfallende Wellenlänge eine Stokes- oder eine Anti-Stokes-Linie aufweist, so dass sich bei der Ramanstreuung an Öl voneinander verschiedene Wellenlängen erhalten lassen. Ferner wird ein Teil des Lichts durch elastische Wechselwirkung gestreut. Dieses als Rayleigh-Streulicht bezeichnete Licht weist dieselbe Wellenlänge auf wie die anregende Welle. Mittels des Transmissionsfilters 22 wird das Rayleigh-Streulicht unterdrückt, so dass nur das wellenlängenverschobene, ramangestreute Licht über die zweite Faser 21 zur Auswerteeinheit 31 gelangen kann.

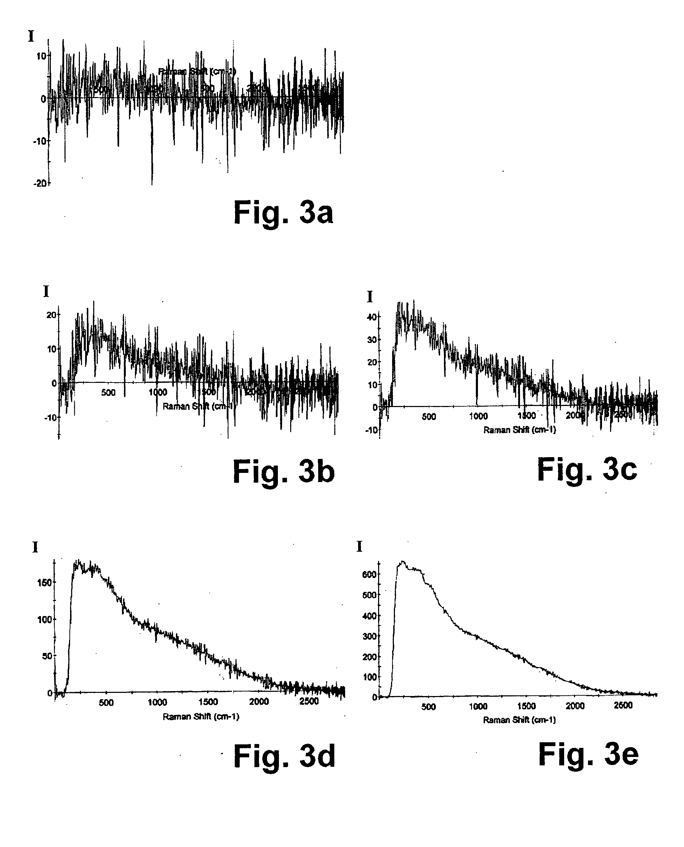

In der Auswerteeinheit 31 wird das vor allem am Öl ramangestreute Licht detektiert und die Intensität bestimmt. Da die Intensität der Raman-Streuung abhängig von der Ölkonzentration im Wasser ist, lässt sich daraus die Ölkonzentration bestimmen. Vorteilhaft ist dabei, dass die Abhängigkeit über einen weiten Bereich linear ist. In den Figuren 3a bis 3e sind Messreihen von verschiedenen Ölkonzentrationen dargestellt. Es wurde jeweils während des Separationsprozesses die Stokes-Linie der linearen Raman-Streuung detektiert und die Intensität I in Abhängigkeit der Ramanverschiebung, in der Figur mit Raman-Shift bezeichnet, dargestellt. Figur 3a zeigt eine Messreihe ohne Ölverschmutzung, Figur 3b eine mit einer Ölverschmutzung von 25 ppm, Figur 3c zeigt eine Messreihe mit 50 ppm Ölverschmutzung, Figur 3d mit 100 ppm und Figur 3e mit 200 ppm Ölverschmutzung. Als anregende Wellenlänge wurde 735 nm verwendet.

Die Wellenlänge des einfallenden Lichtes muss so gewählt sein, dass am Öl eine gut detektierbare Ramanstreuung erfolgt. Dies wurde bei Wellenlängen von 400 nm bis 1500 nm erreicht, wobei ein Bereich von 700 nm bis 1500 nm sich als gut geeignet erwiesen hat. Gute Resultate lassen sich bei Wellenlängen im nahen Infrarotbereich, z.B. bei 735 nm, erzielen. Durch Variation der einfallenden Wellenlänge lässt sich zudem die Messempfindlichkeit und der Dynamikbereich der Messung abstimmen. Die Lichtleiter 20, 21 sind vorzugsweise auf die verwendeten Wellenlängen optimiert.

Wird auch die Anti-Stokes-Linie der Raman-Streuung detektiert, so lässt sich durch die Bildung des Quotienten aus der Intensität der Stokes- und der Anti-Stokes-Linie die Temperatur des Prozesswassers bestimmen. Diese Anti-Stokes-Linie lässt sich für den obengenannten Fall z.B. mit einer einfallenden Wellenlänge von 1061 nm bestimmen.

Eine Langzeitstabilität des Messsignals wird dadurch gewährleistet, dass der Entleerungskanal 11 so geformt ist und eine geeignete Strömungsgeometrie aufweist, dass im Bereich der Messzelle 12 und insbesondere des optischen Fensters 4 Ablagerungen verhindert werden. Zudem lassen sich Reinigungsvorrichtungen für die Messzelle 12 und das optische Fenster 4 vorsehen, beispielsweise auf Ultraschalltechniken basierende Vorrichtungen.

Die erfindungsgemässe Vorrichtung ermöglicht somit eine auch für die Offshore-Erdölförderung geeignete Messung der Ölkonzentration in Wasser.

### Bezugszeichenliste

- 1: Separationstank
- 10: Speicherraum
- 11: Entleerungskanal
- 12: Messzelle
- 2: Glasfaserkabel
- 20: erster Lichtleiter
- 21: zweiter Lichtleiter
- 22: optisches Filter
- 3: Schiff
- 30: Lichtquelle
- 31: Auswerteeinheit
- 4: Optisches Fenster

## Patentansprüche

1. Verfahren zur Bestimmung von Öl in Wasser mittels Ramanstreuung, wobei Licht in eine mit ölverschmutztem Wasser versehene Messzelle (12) eingestrahlt wird und die Messzelle (12) verlassendes, gegenüber dem einfallenden Licht ramanverschobenenes Licht einer Auswertungseinheit (31) zugeführt wird, **dadurch gekennzeichnet, dass** an Öl ramanverschobenes Licht ausgewertet wird.

2. Verfahren nach Anspruch 1, **dadurch gekennzeichnet, dass** eine Stokes-Linie des ramangestreuten Lichts ausgewertet wird.

3. Verfahren nach Anspruch 2, **dadurch gekennzeichnet, dass** zusätzlich eine Anti-Stokes-Linie des ramangestreuten Lichts ausgewertet wird und dass der Quotient der Intensität der Stokes-Linie zur Anti-Stokes-Linie bestimmt wird zwecks Bestimmung der Temperatur des Wassers.

4. Verfahren nach einem der vorangehenden Ansprüche, **dadurch gekennzeichnet, dass** Licht mit einer Wellenlänge von 400 nm bis 1500 nm, vorzugsweise von 700 nm bis 1500 nm, eingestrahlt wird.

5. Verfahren nach einem der vorangehenden Ansprüche, **dadurch gekennzeichnet, dass** Licht mit einer Wellenlänge von 735 nm und/oder von 1061 nm eingestrahlt wird.

6. Vorrichtung zur Bestimmung von Ölkonzentrationen in Wasser mittels Ramanstreuung mit Mitteln (30, 2) zur Einstrahlung von Licht in eine Messzelle (12) und mit einer Auswerteeinheit (31) zur Auswertung von aus der Messzelle (12) austretendem Licht, welches gegenüber dem einfallenden Licht ramanverschoben ist, **dadurch gekennzeichnet, dass** die Auswerteeinheit (31) Mittel zur Auswertung von an Öl ramanverschobenem Licht aufweist.

7. Vorrichtung nach Anspruch 6, **dadurch gekennzeichnet, dass** die Messzelle (12) Bestandteil eines Unterwasser-Separatortanks (1) ist und eine Lichtquelle (30) über der Wasseroberfläche angeordnet ist, die Auswerteeinheit (31) über der Wasseroberfläche angeordnet ist und dass die Vorrichtung einen ersten faseroptischen Lichtleiter (20) zur Übermittlung von Licht einer ersten Wellenlänge von der Lichtquelle (30) zur Messzelle (12) und einen zweiten faseroptischen Lichtleiter (21) zur Übermittlung von Licht einer zweiten Wellenlänge von der Messzelle (12) zur Auswerteeinheit (31) aufweist, wobei die Vorrichtung ein optisches Filter (22) aufweist, um eine Übermittlung von Licht der ersten Wellenlänge an die Auswerteeinheit (31) zu vermeiden.

8. Vorrichtung nach Anspruch 7, **dadurch gekennzeichnet, dass** die mechanische Verbindung der zwei Lichtleiter (20, 21) mit der Messzelle (12) über ein optisches Fenster (4) erfolgt, wobei das optische Filter (22) zwischen dem optischen Fenster (4) und dem zweiten Lichtleiter (21) angeordnet ist.

9. Vorrichtung nach einem der vorangehenden Ansprüche, **dadurch gekennzeichnet, dass** die Lichtleiter (20, 21) für die Übermittlung von Wellenlängen ausgelegt sind, welche im Bereich von 400 nm bis 1500 nm liegen.

10. Vorrichtung nach Anspruch 6, **dadurch gekennzeichnet, dass** die Auswerteeinheit (31) Mittel aufweist, um eine Stokes-Linie des ramanverschobenen Lichts und eine Anti-Stokes-Linie des ramanverschobenen Lichts zu detektieren und um den Quotienten aus den Intensitäten der zwei Linien zwecks Bestimmung der Temperatur des Wassers zu bilden.
